# EUROPÄISCHE PATENTANMELDUNG

(11) **EP 1 815 920 A1**
(43) Veröffentlichungstag der Anmeldung: **08.08.2007**
(21) Anmeldenummer: 07001822.1
(22) Anmeldetag: 27.01.2007
(51) Int. Cl.: B21C 37/08

(54) **Verfahren und Anlage zur Bearbeitung der inneren Längsnaht von längsnahtgeschweissten Bauteilen, wie Rohre, Behälter, Kessel o.dgl.**

(30) Priorität: 07.02.2006 DE 102006005742; 19.01.2007 DE 102007003786
(71) Anmelder: Theodor Gräbener GmbH & Co. KG, 57250 Netphen-Werthenbach (DE)
(72) Erfinder: Kapp, Dieter, 57234 Wilnsdorf (DE)
(74) Vertreter: Pürckhauer, Rolf

(57) **Zusammenfassung**

Es handelt sich um ein Verfahren und eine Anlage zur Bearbeitung der inneren Längsnaht von längsnahtgeschweißten Bauteilen (2), wie Rohre, Behälter, Kessel o.dgl.. Um ein Verfahren und eine Anlage zu schaffen, mit dem bzw. der die Schweißkerben sehr genau bearbeitet werden können, so dass ein Ausfall der Bauteile durch eine schwellende Belastung weitestgehend ausgeschlossen ist, und das bzw. die eine relativ schnelle Bearbeitung der Kerben ermöglicht, wobei auch eine kostengünstige Bearbeitung erreicht wird, weist die Anlage eine Fräslanze (3) auf, in der ein Frässupport (4) horizontal verfahrbar gelagert ist. Am unteren Ende (10) der Fräslanze (3) ist eine Vielzahl von Stütz- und Ausrichtelementen zur Fixierung der Fräslanze (3) vorgesehen ist. Der Frässupport (4) besteht aus hintereinander angeordneten Fräseinheiten (11) mit an deren unteren Enden (12) jeweils in einer Spindel (13) befestigten Fräsern (14), wobei im Frässupport (4) vor und hinter den Fräseinheiten (11) Erfassungsvorrichtungen (15) vorgesehen sind. Am Frässupport (4) ist ein denselben horizontal in der Fräslanze (3) verfahrbarer Vorschubantrieb (17) vorgesehen.

## Beschreibung

Die Erfindung bezieht sich auf ein Verfahren zur Bearbeitung der inneren Längsnaht von längsnahtgeschweißten Bauteilen, wie Rohre, Behälter, Kessel o.dgl. sowie auf eine Anlage zur Durchführung des Verfahrens.

Unter Druck beaufschlagte Bauteile, wie Rohre, Behälter, Kessel o.dgl. unterliegen bedingt durch die Befüllung mit Fluiden oder gasförmigen Medien und den dadurch erzeugten Innendruck schwellenden Wechselbeanspruchungen. Das Festigkeitsverhalten der Bauteile und somit die Lebensdauer wird durch die konstruktive Gestaltung sowie die fertigungstechnische Herstellung beeinflusst. Das Auftreten von Kerbspannungszuständen, die Spannungsspitzen an der Bauteiloberfläche vor allem im Übergang zur Schweißnaht hervorrufen, bewirken eine Reduzierung der zulässigen Fülldrücke zur Sicherstellung einer Lebensdauerfestigkeit.

Bei einer schwellenden Belastung sind die Kerben zwischen Schweißnaht und Bauteil als kritische Bereiche zu betrachten, an denen das Bauteil zum Ausfall kommen kann. Um diese kritischen Bereiche zu vermeiden, werden die Kerben weggefräst, so dass ein Radius als Übergang zur Schweißnaht entsteht.

Zur wirtschaftlichen Bearbeitung der Kerben (Übergang der Schweißnaht zum Grundmaterial) existieren derzeit keine Anlagen auf dem Markt, die diese Bearbeitungen ermöglichen. Eine Bearbeitung der Bauteile von Hand ist nicht zumutbar bzw. unrentabel, da diese im eigentlichen Bauteil, beispielsweise ein Rohr mit 1000 mm Durchmesser und einer Rohrlänge von 18 m, auszuführen sind.

Der Erfindung liegt daher die Aufgabe zugrunde, ein Verfahren sowie eine Anlage der angegebenen Gattung zu schaffen, mit dem bzw. der die Kerben sehr genau bearbeitet werden können, so dass ein Ausfall der Bauteile durch eine schwellende Belastung weitestgehend ausgeschlossen ist, und das bzw. die eine relativ schnelle Bearbeitung der Kerben ermöglicht, wobei auch eine kostengünstige Bearbeitung erreicht wird.

Diese Aufgabe wird erfindungsgemäß zum einen durch ein Verfahren gemäß dem Kennzeichnungsteil der Patentansprüche 1, 2 3 und 4 und zum anderen durch eine Anlage gemäß dem Kennzeichnungsteil des Patentanspruchs 5 gelöst.

Zweckmäßige Weiterbildungen der erfindungsgemäßen Anlage sind in den Patentansprüchen 6 bis 15 gekennzeichnet.

Durch das Erfassen der Werte der Kerben (Positionswerte und Werte der Kerbtiefen) an der Schweißnaht vor den Fräseinheiten ist eine optimale Steuerung der Fräser gewährleistet, so dass ein exakter Verlauf der Fräsbearbeitung gewährleistet ist. Durch die Trennung der Elemente des Frässupportes und durch die bewegliche Kopplung untereinander wird das Ergebnis der Fräsbearbeitung weiter optimiert, da jedes Element die gleiche Bewegung an den Führungsleisten in der Fräslanze durchführt.

Die Erfassungseinheiten am Ende des Frässupportes messen die Frästiefe und führen eine mitlaufende Qualitätsprüfung durch, so dass eine weitere Kontrolle des Bauteils bzw. der Fräsbearbeitung nicht notwendig ist.

Weitere Vorteile der Erfindung ergeben sich aus der nachfolgenden Beschreibung anhand eines die Erfindung wiedergebenden und in der Zeichnung dargestellten Ausführungsbeispieles. Dabei zeigt
- Fig. 1: eine Seitenansicht der erfindungsgemäßen Anlage mit noch nicht in das Bauteil eingefahrener Fräslanze,
- Fig. 2: eine weitere Seitenansicht der Anlage, bei der die Fräslanze das Bauteil durchdrungen hat und der Frässupport am Anfang des Bauteils positioniert ist,
- Fig. 3: eine dritte Seitenansicht der Anlage, bei der der Frässupport seine Bearbeitung beendet hat,

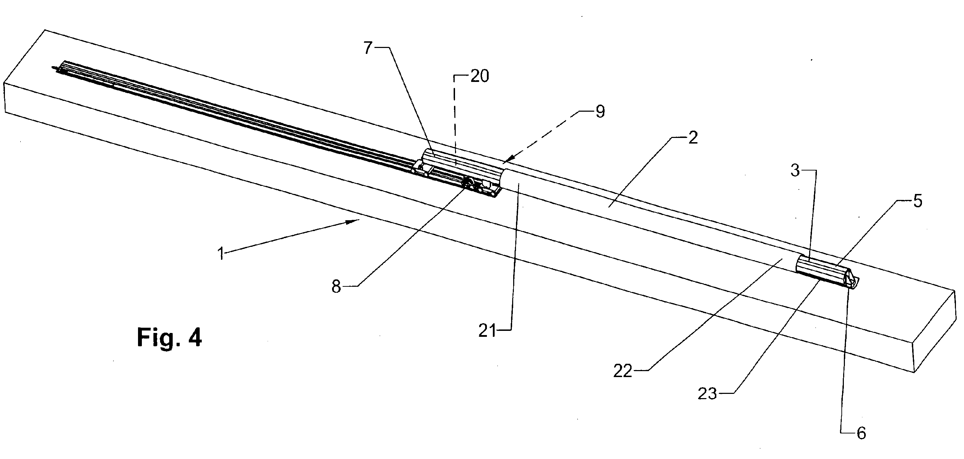

- Fig. 4: eine perspektivische Ansicht der Anlage nach Fig. 3,
- Fig. 5: eine Seitenansicht der in dem Frässupport enthaltenen Elemente, jedoch ohne Kopplungen zwischen den einzelnen Elementen,
- Fig. 6: eine Draufsicht der in dem Frässupport enthaltenen Elemente, ebenfalls ohne Kopplungen zwischen den einzelnen Elementen und

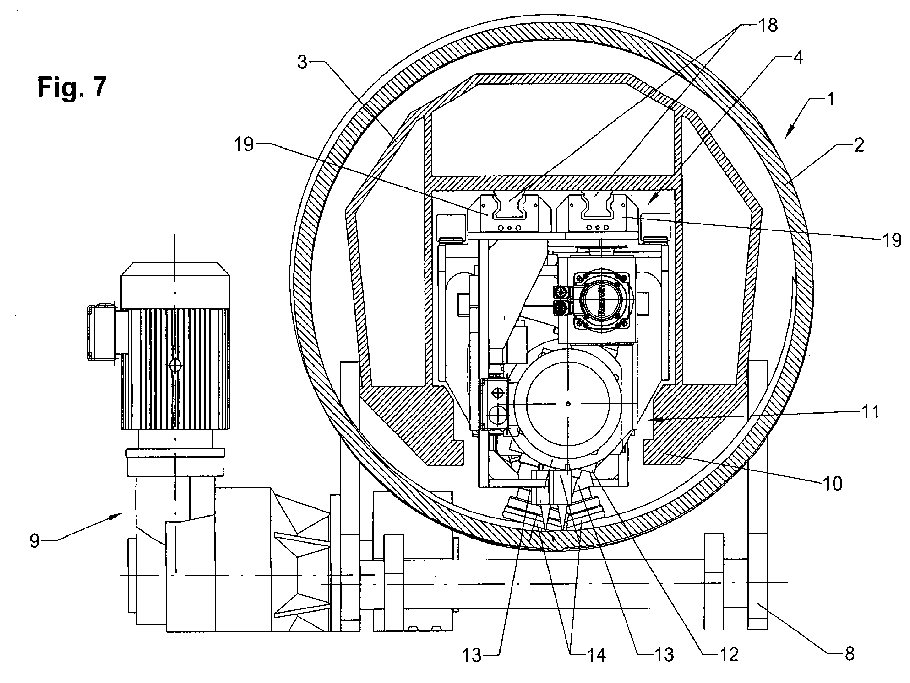

- Fig. 7: einen Querschnitt durch das Bauteil und die Fräslanze im Bereich der Fräseinheiten.

Die in den Figuren dargestellte Anlage 1 zur Bearbeitung der inneren Längsnaht von längsgeschweißten Bauteilen 2, wie Rohre, Behälter, Kessel o.dgl. (in dem Ausführungsbeispiel als Rohr dargestellt und beschrieben), die nach mehreren unterschiedlichen Verfahren arbeitet, die später noch genauer beschrieben werden, weist eine Fräslanze 3 auf, in der ein Frässupport 4 horizontal verfahrbar gelagert ist. Die Fräslanze 3 ist bei einem ersten, wie in den Figuren dargestellten Ausführungsbeispiel ebenfalls horizontal in der Y-Achse verfahrbar. Dazu weist die Fräslanze 3 an ihrem vorderen Ende 5 Rollen 6 auf, die vorzugsweise ballig entsprechend der Krümmung des Rohres 2 ausgebildet sind. An ihrem hinteren Ende 7 weist die Fräslanze 3 ein verfahrbares Auflager 8 mit einem daran angeordneten Vorschubantrieb 9 auf.

Bei einem zweiten Ausführungsbeispiel der Anlage 1, das in den Figuren nicht dargestellt ist, ist die Fräslanze 3 horizontal nicht verfahrbar ausgebildet. Darauf wird später noch einmal bei der Beschreibung der Verfahren genauer eingegangen.

Am unteren Ende 10 der Fräslanze 3 ist eine Vielzahl von Stütz- und Ausrichtelementen (nicht dargestellt) zur Fixierung der Fräslanze 3 vorgesehen. Diese Stütz- und Ausrichtelemente, die beispielsweise Druckmittelzylinder sein können, verhindern zum einen eine Durchbiegung der relativ langen Fräslanze 3 und sorgen zum anderen dafür, dass die Fräslanze 3 nach dem Erreichen ihrer Arbeitsstellung ausgerichtet wird.

Der in der Fräslanze 3 horizontal verfahrbare Frässupport 4 besteht (bei den Ausführungsbeispielen der Anlage 1, die nach den beiden ersten Verfahren arbeiten) u.a. aus hintereinander angeordneten Fräseinheiten 11 mit an deren unteren Enden 12 jeweils in einer Spindel 13 befestigten Fräsern 14. In dem hier beschriebenen und in den Figuren dargestellten Ausführungsbeispiel sind zwei Fräseinheiten 11 vorgesehen, wobei auch lediglich eine Fräseinheit 11 vorgesehen sein kann (z.B. wie bei den Ausführungsbeispielen der Anlage 1, die nach dem dritten und vierten Verfahren arbeitet, worauf später bei der Beschreibung des Verfahrens genauer eingegangen wird). Im Frässupport 4 sind vor und hinter den Fräseinheiten 11 Erfassungsvorrichtungen 15 vorgesehen, wobei die vor den Fräseinheiten 11 angeordneten Erfassungsvorrichtungen 15 zur Erfassung der jeweils zu bearbeitenden Schweißkerbe und die hinter den Fräseinheiten 11 angeordneten Erfassungsvorrichtungen 15 für die Erfassung der Frästiefe und zur Qualitätsprüfung vorgesehen sind. Da jeweils eine linke und eine rechte Schweißkerbe, vorhanden ist, werden mindestens zwei Erfassungsvorrichtungen 15 benötigt, wobei auch für die Erfassung der Frästiefe und zur Qualitätsprüfung jeweils mindestens eine Erfassungsvorrichtung 15 notwendig ist. Beispielsweise kann als Erfassungsvorrichtung 15 eine Lasereinrichtung dienen.

Jeder Fräser 14 einer Fräseinheit 11 ist in Abhängigkeit der ermittelten Werte der zugehörigen Erfassungsvorrichtung 15 in einer X- und Z-Achse steuerbar. D.h., die Erfassungsvorrichtung 15 für die linke Schweißkerbe ermittelt die Werte derselben und gibt diese an die Steuerung weiter, woraufhin die zugehörige Fräseinheit in ihrer X- und Z-Achse gesteuert wird. Das Gleiche gilt für die Erfassungsvorrichtung 15 für die rechte Schweißkerbe.

Zusätzlich kann jeder Fräser 14 einer Fräseinheit 11 in Abhängigkeit der ermittelten Werte der zugehörigen Erfassungsvorrichtung 15 in seiner Schwenk- und Zustellachse steuerbar sein (siehe auch Beschreibung zum dritten und vierten Verfahren) .

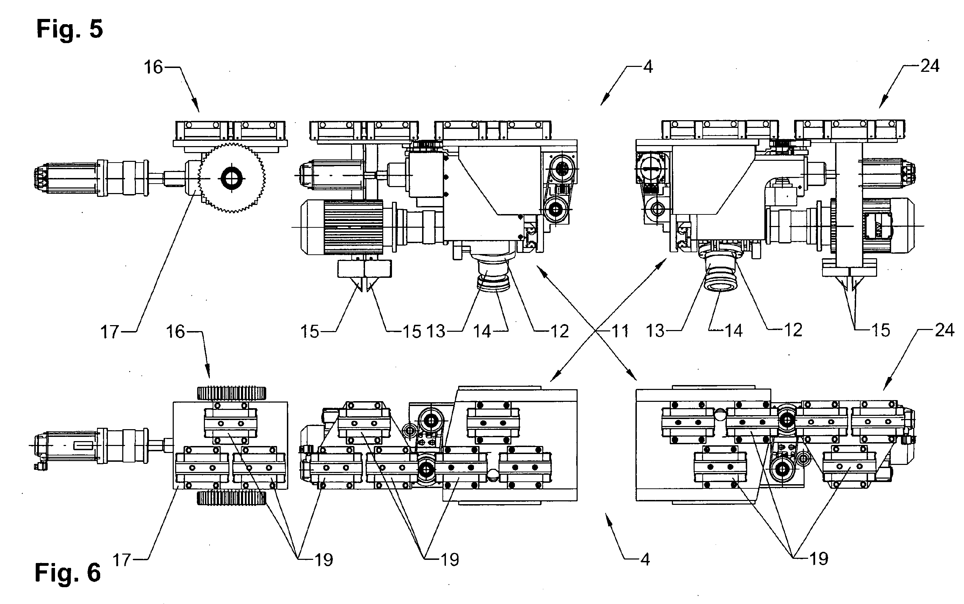

Um den Frässupport 4 horizontal in der Y-Achse entlang der Fräslanze 3 zu verfahren, ist am hinteren Ende 16 des Frässupportes 4 ein weiterer Vorschubantrieb 17 vorgesehen, der beispielweise über einen Zahnstangenantrieb den Frässupport 4 in der Fräslanze 3 verfährt. Wie die Fign. 5 und 6 zeigen, sind sämtliche Elemente des Frässupportes 4, d.h. Erfassungsvorrichtungen 15 vor den Fräseinheiten 11, jede Fräseinheit 11, die Erfassungsvorrichtungen 15 hinter den Fräseinheiten 11 sowie der Vorschubantrieb 17 jeweils getrennt in der Fräslanze 3, beispielsweise an Führungsschienen 18 mittels Führungswagen 19 geführt, wobei die Elemente miteinander kardanisch gekuppelt sind (nicht dargestellt). Dadurch kann jedes einzelne Element genauer dem Verlauf der Führungsschienen 18 folgen.

Am hinteren Ende 16 des Frässupportes 4 ist eine Energiezuführung in Form einer Lanze 20 vorgesehen.

Nach dieser Beschreibung der Anlage sollen nunmehr die Verfahren zur Bearbeitung der inneren Längsnaht von längsnahtgeschweißten Bauteilen 2, wie Rohre, Behälter, Kessel o.dgl. anhand eines zu bearbeitenden Rohres 2 beschrieben werden.

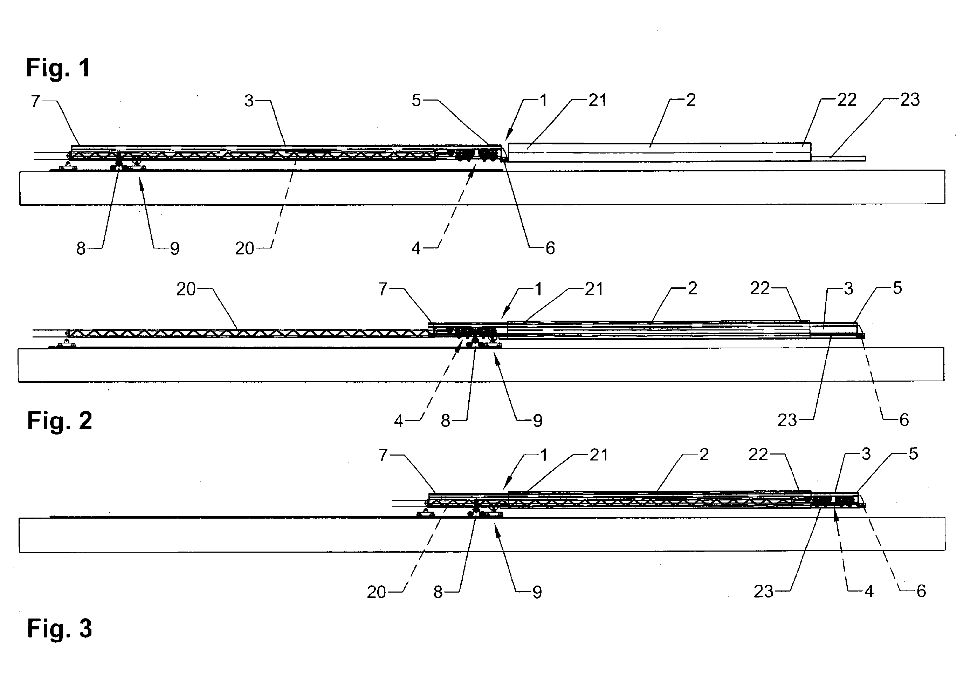

Bei einem ersten Verfahren wird zunächst ein Rohr 2 der Anlage 1 zugeführt, wobei die Längsnaht des Rohres 2 beispielsweise senkrecht nach unten positioniert wird (siehe Fig. 1). Anschließend fährt die Fräslanze 3 der Anlage 1 in das vordere Ende 21 des Rohres 2 ein, tritt am hinteren Ende 22 des Rohres 2 wieder aus und wird mit seinem vorderen Ende 5 in einer an das Rohr 2 anschließenden Schale 23 gelagert (siehe Fig. 2).

Diese Arbeitsgänge sind bei einem dritten Verfahren identisch, weichen jedoch bei einem zweiten und einem vierten Verfahren ab. Dort wird nämlich das Rohr 2 über die Fräslanze 3 der Anlage 1 geschoben, bis dass das vordere Ende 5 der Fräslanze 3 am hinteren Ende 22 des Rohres 2 wieder austritt. Auch hier wird das vordere Ende 5 der Fräslanze 3 in einer Schale 23 gelagert. Anschließend wir die Längsnaht des Rohres 2 vorzugsweise senkrecht nach unten positioniert.

Die nachfolgenden Schritte sind nun zunächst bei den beiden ersten Verfahren gleich.

Die Fräslanze 3 wird mit einer Vielzahl der Stütz- und Ausrichtelemente in dem Rohr 2 fixiert. Danach fährt der in der Fräslanze 3 geführte Frässupport 4 in das vordere Ende 21 des Rohres 2 ein. Die am vorderen Ende 24 des Frässupportes 4 angeordneten Erfassungsvorrichtungen 15 erfassen die Schweißkerben der Längsnaht und leiten die erfassten Werte an die Steuerung weiter. Die hinter diesen Erfassungsvorrichtungen 15 nacheinander angeordneten Fräseinheiten 11 des Frässupportes 4 bearbeiten nun mit ihren Fräsern 14 entsprechend der von den Erfassungsvorrichtungen 15 erfassten Werten die jeweilige Schweißkerbe. Nachfolgend erfolgt die Erfassung der Frästiefe und die Durchführung der Qualitätsprüfung durch die den Fräseinheiten 11 nachgeschalteten Erfassungsvorrichtungen 15 des Frässupportes 4.

Danach unterscheiden sich die beiden ersten Verfahren wieder, wobei zunächst das erste Verfahren weiter beschrieben ist.

Nach Beendigung der Bearbeitung der Schweißkerbe bzw. nach Beendigung aller Erfassungsarbeiten durch die Erfassungsvorrichtungen 15 (siehe Fig. 3) werden die Stütz- und Ausrichtelemente der Fräslanze 3 eingefahren und die Fräslanze 3 wird gemeinsam mit dem integrierten Frässupport 4 und der daran anschließenden Energiezuführung in Form einer Lanze 20 über das vordere Ende 21 des Rohres 2 aus demselben herausgefahren. Danach wird das fertige Rohr 2 aus der Anlage 1 entnommen.

Bei dem zweiten Verfahren werden nach Beendigung der Bearbeitung der Schweißkerbe bzw. nach Beendigung aller Erfassungsarbeiten durch die Erfassungsvorrichtungen 15 die Stütz- und Ausrichtelemente der Fräslanze 3 ebenfalls eingefahren. Danach jedoch wird das fertig bearbeitete Rohr 2 über die feststehende Fräslanze 3 aus der Anlage 1 entnommen. Gleichzeitig oder anschließend wird der Frässupport 4 mit der daran anschließenden Energiezuführung in Form einer Lanze 20 wieder in seine Startposition gefahren.

Bei dem dritten und vierten Verfahren erfolgen nach dem Lagern der Fräslanze 3 in der Schale 23 folgende Schritte:

Zunächst wird hier ebenfalls die Fräslanze 3 wird mit einer Vielzahl von Stütz- und Ausrichtelementen in dem Rohr 2 fixiert (siehe auch erstes Verfahren). Danach fährt auch hierbei der in der Fräslanze 3 geführte Frässupport 4 in das vorderen Ende des Rohres 2 ein. Die am vorderen Ende 24 des Frässupportes 4 angeordnete Erfassungsvorrichtungen 15 erfassen nun die eine Seite der Schweißkerben der Längsnaht und leiten die erfassten Werte an die Steuerung weiter. Die hinter den Erfassungsvorrichtungen 15 angeordnete Fräseinheit 11 des Frässupportes 4 bearbeitet mit ihrem Fräser 14 entsprechend den von den Erfassungsvorrichtungen 15 erfassten Werten die eine Seite der Schweißkerben. Nachfolgend erfolgt die Erfassung der Frästiefe und die Durchführung der Qualitätsprüfung durch die der Fräseinheit 11 nachgeschalteten Erfassungsvorrichtungen 15 des Frässupportes 4.

Nach Beendigung der Bearbeitung der einen Seite der Schweißkerbe bzw. wird die Spindel 13 der Fräseinheit 11 mit dem Fräser 14 geschwenkt. Die am hinteren Ende 16 des Frässupportes angeordnete Erfassungsvorrichtungen 15 erfassen nun die andere Seite der Schweißkerben der Längsnaht, wobei die Fräseinheit 11 des Frässupportes auf ihrem Rückhub mit ihrem Fräser 14 entsprechend den von den Erfassungsvorrichtungen 15 erfassten Werten nun die andere Seite der Schweißkerben bearbeitet. Die am vorderen Ende 24 des Frässupports 4 angeordneten Erfassungsvorrichtungen 15 erfassen die Frästiefe und führen eine Qualitätsprüfung durch.

Danach unterscheiden sich das dritte und vierte Verfahren wieder, wobei zunächst das dritte Verfahren weiter beschrieben ist.

Wie bei dem ersten Verfahren werden nach Beendigung der Bearbeitung der anderen Seite der Schweißkerbe bzw. aller Erfassungsarbeiten durch die Erfassungsvorrichtungen 15, wie bereits zu dem ersten Verfahren beschrieben, die Stütz- und Ausrichtelemente der Fräslanze 3 eingefahren bzw. zurückgezogen oder weggeklappt und die Fräslanze 3 wird gemeinsam mit dem integrierten Frässupport 4 und der daran anschließenden Energiezuführung in Form einer Lanze 20 über das vordere Ende 21 des Rohres 2 aus demselben herausgefahren. Danach wird das fertige Rohr 2 aus der Anlage 1 entnommen.

Bei dem vierten Verfahren werden, wie bei dem zweiten Verfahren, nach Beendigung der Bearbeitung der Schweißkerbe bzw. nach Beendigung aller Erfassungsarbeiten durch die Erfassungsvorrichtungen 15 die Stütz- und Ausrichtelemente der Fräslanze 3 ebenfalls eingefahren. Danach jedoch wird das fertig bearbeitete Rohr 2 über die feststehende Fräslanze 3 aus der Anlage 1 entnommen. Gleichzeitig oder anschließend wird der Frässupport 4 mit der daran anschließenden Energiezuführung in Form einer Lanze 20 wieder in seine Startposition gefahren.

Alternativ zur waagerechten Lage des Rohres 2 kann dasselbe auch in jeder beliebigen Lage senkrecht oder in einem Winkel senkrecht positioniert sein. Die Fräslanze 3 wird dann vorzugsweise mit einem Kran o.dgl. in das Rohr 2 zur Bearbeitung eingeführt.

### Bezugszeichen

- 1: Anlage
- 2: Bauteile (Rohre ...)
- 3: Fräslanze von 1
- 4: Frässupport in 3
- 5: vorderes Ende von 3
- 6: Rollen an 5
- 7: hinteres Ende von 3
- 8: Auflager an 3
- 9: Vorschubantrieb an 8 für 3
- 10: unteres Ende von 3
- 11: Fräseinheiten von 4
- 12: untere Enden von 11
- 13: Spindeln von 11
- 14: Fräser in 13
- 15: Erfassungsvorrichtungen an 4
- 16: hinteres Ende von 4
- 17: Vorschubantrieb für 4
- 18: Führungsschienen in 3 für 4
- 19: Führungswagen auf 18 an 11, 15 und 17
- 20: Lanze an 4 (Energiezuführung)
- 21: vorderes Ende von 2
- 22: hinteres Ende von 2
- 23: Schale bei 22
- 24: vorderes Ende von 4

## Patentansprüche

1. Verfahren zur Bearbeitung der inneren Längsnaht von längsnahtgeschweißten Bauteilen, wie Rohre, Behälter, Kessel o.dgl., **gekennzeichnet durch** folgende Verfahrensschritte:
a) ein Bauteil wird einer Anlage zugeführt, wobei die Längsnaht des Bauteils positioniert wird;
b) eine Fräslanze der Anlage fährt in das vordere Ende des Bauteils ein, tritt am hinteren Ende des Bauteils wieder aus und wird mit seinem vorderen Ende in einer an das Bauteil anschließenden Schale gelagert;
c) die Fräslanze wird mit einer Vielzahl von Stütz- und Ausrichtelementen in dem Bauteil fixiert;
d) ein in der Fräslanze geführter Frässupport fährt in das vorderen Ende des Bauteils ein;
e) am vorderen Ende des Frässupportes angeordnete Erfassungsvorrichtungen erfassen die Schweißkerben der Längsnaht;
f) mindestens eine hinter den Erfassungsvorrichtungen angeordnete Fräseinheit des Frässupportes bearbeitet mit ihrem Fräser entsprechend den von den Erfassungsvorrichtungen erfassten Werten die Schweißkerben;
g) der bzw. den Fräseinheiten nachgeschaltete Erfassungsvorrichtungen des Frässupportes erfassen die Frästiefe und führen eine Qualitätsprüfung **durch**;
h) nach Beendigung der Bearbeitung der Schweißkerbe bzw. nach Beendigung aller Erfassungsarbeiten **durch** die Erfassungsvorrichtungen werden die Stütz- und Ausrichtelemente der Fräslanze eingefahren bzw. zurückgezogen oder weggeklappt und die Fräslanze wird gemeinsam mit dem integrierten Frässupport und der daran anschließenden Energiezuführung über das vordere Ende des Bauteils aus demselben herausgefahren;
i) das bearbeitete Bauteil wird aus der Anlage entnommen.

2. Verfahren nach dem Oberbegriff des Patentanspruchs 1, **gekennzeichnet durch** folgende Verfahrensschritte:
a) ein Bauteil wird über eine Fräslanze der Anlage geschoben, bis daß das vordere Ende der Fräslanze am hinteren Ende des Bauteils wieder austritt, wobei das vordere Ende der Fräslanze in einer Schale gelagert wird;
b) die Längsnaht des Bauteils wird positioniert;
c) die Fräslanze wird mit einer Vielzahl von Stütz- und Ausrichtelementen in dem Bauteil fixiert;
d) ein in der Fräslanze geführter Frässupport fährt in das vordere Ende des Bauteils ein;
e) am vorderen Ende des Frässupportes angeordnete Erfassungsvorrichtungen erfassen die Schweißkerben der Längsnaht;
f) mindestens eine hinter den Erfassungsvorrichtungen angeordnete Fräseinheit des Frässupportes bearbeitet mit ihrem Fräser entsprechend den von den Erfassungsvorrichtungen erfassten Werten die Schweißkerben;
g) der bzw. den Fräseinheiten nachgeschaltete Erfassungsvorrichtungen des Frässupportes erfassen die Frästiefe und führen eine Qualitätsprüfung **durch**;
h) nach Beendigung der Bearbeitung der Schweißkerbe bzw. nach Beendigung aller Erfassungsarbeiten **durch** die Erfassungsvorrichtungen werden die Stütz- und Ausrichtelemente der Fräslanze eingefahren bzw. zurückgezogen oder weggeklappt und das bearbeitete Bauteil wird über die Fräslanze aus der Anlage entnommen;
i) gleichzeitig oder anschließend wird der Frässupport mit der daran anschließenden Energiezuführung wieder in seine Startposition gefahren.

3. Verfahren nach dem Oberbegriff des Patentanspruchs 1, **gekennzeichnet durch** folgende Verfahrensschritte:
a) ein Bauteil wird einer Anlage zugeführt, wobei die Längsnaht des Bauteils positioniert wird;
b) eine Fräslanze der Anlage fährt in das vordere Ende des Bauteils ein, tritt am hinteren Ende des Bauteils wieder aus und wird mit seinem vorderen Ende in einer an das Bauteil anschließenden Schale gelagert;
c) die Fräslanze wird mit einer Vielzahl von Stütz- und Ausrichtelementen in dem Bauteil fixiert;
d) ein in der Fräslanze geführter Frässupport fährt in das vordere Ende des Bauteils ein;
e) am vorderen Ende des Frässupportes angeordnete Erfassungsvorrichtungen erfassen die eine Seite der Schweißkerben der Längsnaht;
f) eine hinter den Erfassungsvorrichtungen angeordnete Fräseinheit des Frässupportes bearbeitet mit ihrem Fräser entsprechend den von den Erfassungsvorrichtungen erfassten Werten die eine Seite der Schweißkerben;
g) der Fräseinheit nachgeschaltete Erfassungsvorrichtungen des Frässupportes erfassen die Frästiefe und führen eine Qualitätsprüfung **durch**;
h) nach Beendigung der Bearbeitung der einen Seite der Schweißkerbe bzw. wird die Spindel der Fräseinheit mit dem Fräser geschwenkt;
i) am hinteren Ende des Frässupportes angeordnete Erfassungsvorrichtungen erfassen die andere Seite der Schweißkerben der Längsnaht;
j) die Fräseinheit des Frässupportes bearbeitet auf ihrem Rückhub mit ihrem Fräser entsprechend den von den Erfassungsvorrichtungen erfassten Werten die andere Seite der Schweißkerben;
k) der Fräseinheit nachgeschaltete Erfassungsvorrichtungen des Frässupportes erfassen die Frästiefe und führen eine Qualitätsprüfung **durch**;
l) nach Beendigung der Bearbeitung der anderen Seite der Schweißkerbe bzw. nach Beendigung aller Erfassungsarbeiten **durch** die Erfassungsvorrichtungen werden die Stütz- und Ausrichtelemente der Fräslanze eingefahren bzw. zurückgezogen oder weggeklappt und die Fräslanze wird gemeinsam mit dem integrierten Frässupport und der daran anschließenden Energiezuführung über das vordere Ende des Bauteils aus demselben herausgefahren;
m) das bearbeitete Bauteil wird aus der Anlage entnommen.

4. Verfahren nach dem Oberbegriff des Patentanspruchs 1, **gekennzeichnet durch** folgende Verfahrensschritte:
a) ein Bauteil wird über eine Fräslanze der Anlage geschoben, bis dass das vordere Ende der Fräslanze am hinteren Ende des Bauteils wieder austritt, wobei das vordere Ende der Fräslanze in einer Schale gelagert wird;
b) die Längsnaht des Bauteils wird positioniert;
c) die Fräslanze wird mit einer Vielzahl von Stütz- und Ausrichtelementen in dem Bauteil fixiert;
d) ein in der Fräslanze geführter Frässupport fährt in das vordere Ende des Bauteils ein;
e) am vorderen Ende des Frässupportes angeordnete Erfassungsvorrichtungen erfassen die eine Seite der Schweißkerben der Längsnaht;
f) eine hinter den Erfassungsvorrichtungen angeordnete Fräseinheit des Frässupportes bearbeitet mit ihrem Fräser entsprechend den von den Erfassungsvorrichtungen erfassten Werten die eine Seite der Schweißkerben;
g) der Fräseinheit nachgeschaltete Erfassungsvorrichtungen des Frässupportes erfassen die Frästiefe und führen eine Qualitätsprüfung **durch**;
h) nach Beendigung der Bearbeitung der einen Seite der Schweißkerbe bzw. wird die Spindel der Fräseinheit mit dem Fräser geschwenkt;
i) am hinteren Ende des Frässupportes angeordnete Erfassungsvorrichtungen erfassen die andere Seite der Schweißkerben der Längsnaht;
j) die Fräseinheit des Frässupportes bearbeitet auf ihrem Rückhub mit ihrem Fräser entsprechend den von den Erfassungsvorrichtungen erfassten Werten die andere Seite der Schweißkerben;
k) der Fräseinheit nachgeschaltete Erfassungsvorrichtungen des Frässupportes erfassen die Frästiefe und führen eine Qualitätsprüfung **durch**;
l) nach Beendigung der Bearbeitung der anderen Seite der Schweißkerbe bzw. nach Beendigung aller Erfassungsarbeiten **durch** die Erfassungsvorrichtungen werden die Stütz- und Ausrichtelemente der Fräslanze eingefahren bzw. zurückgezogen oder weggeklappt und das bearbeitete Bauteil wird über die Fräslanze aus der Anlage entnommen;
m) gleichzeitig oder anschließend wird der Frässupport mit der daran anschließenden Energiezuführung wieder in seine Startposition gefahren.

5. Anlage zur Durchführung der Verfahren nach Anspruch 1, 2, 3 oder 4, **dadurch gekennzeichnet, dass** die Anlage eine Fräslanze (3) aufweist, in der ein Frässupport (4) horizontal verfahrbar gelagert ist, dass am unteren Ende (10) der Fräslanze (3) eine Vielzahl von Stütz- und Ausrichtelementen zur Fixierung der Fräslanze (3) vorgesehen ist, dass der Frässupport (4) aus hintereinander angeordneten Fräseinheiten (11) mit an deren unteren Enden (12) jeweils in einer Spindel (13) befestigten Fräsern (14) besteht, wobei im Frässupport (4) vor und hinter den Fräseinheiten (11) Erfassungsvorrichtungen (15) vorgesehen sind, und dass am Frässupport (4) eine denselben horizontal in der Fräslanze (3) verfahrbaren Vorschubantrieb (17) vorgesehen ist.

6. Vorrichtung nach Anspruch 5, **dadurch gekennzeichnet, dass** die Fräslanze (3) horizontal in der Y-Achse verfahrbar ist.

7. Vorrichtung nach Anspruch 5 oder 6, **dadurch gekennzeichnet, dass** die Fräslanze (3) an ihrem vorderen Ende (5) Rollen (6) zum Verfahren derselben aufweist, die vorzugsweise ballig entsprechende der Krümmung des Bauteils (2) ausgebildet sind.

8. Vorrichtung nach einem der Ansprüche 5 bis 7, **dadurch gekennzeichnet, dass** die Fräslanze (3) an ihrem hinteren Ende (7) ein verfahrbares Auflager(8) mit einem daran angeordneten weiteren Vorschubantrieb (9) aufweist.

9. Vorrichtung nach einem Ansprüche 5 bis 8, **dadurch gekennzeichnet, dass** die Elemente des Frässupportes (4), d.h. die Erfassungsvorrichtungen (15) vor den Fräseinheiten (11), jede Fräseinheit (11), die Erfassungsvorrichtungen (15) hinter den Fräseinheiten (11) sowie der Vorschubantrieb (17) jeweils getrennt in der Fräslanze (3) geführt sind.

10. Vorrichtung nach Anspruch 9, **dadurch gekennzeichnet, dass** die Elemente des Frässupportes (4) miteinander gekoppelt sind.

11. Vorrichtung nach einem der Ansprüche 5 bis 10, **dadurch gekennzeichnet, dass** vor den Fräseinheiten (11) mindestens zwei Erfassungsvorrichtungen (15) zur Erfassung der linken und der rechten Schweißkerbe vorgesehen sind.

12. Vorrichtung nach einem der Ansprüche 5 bis 11, **dadurch gekennzeichnet, dass** hinter den Fräseinheiten (11) mindestens zwei Erfassungsvorrichtungen (15) zur Erfassung der Frästiefe und als Qualitätsprüfung vorgesehen sind..

13. Vorrichtung nach einem der Ansprüche 5 bis 12, **dadurch gekennzeichnet, dass** jeder Fräser (14) einer Fräseinheit (11) in Abhängigkeit der ermittelten Werte der zugehörigen Erfassungsvorrichtung (15) in seiner X- und Z-Achse steuerbar ist.

14. Vorrichtung nach einem der Ansprüche 5 bis 13, **dadurch gekennzeichnet, dass** jeder Fräser (14) einer Fräseinheit (11) in Abhängigkeit der ermittelten Werte der zugehörigen Erfassungsvorrichtung (15) in seiner Schwenk- und Zustellachse steuerbar ist.

15. Vorrichtung nach einem der Ansprüche 5 bis 14, **dadurch gekennzeichnet, dass** am Frässupport (4) eine Energiezuführung in Form einer Lanze (20) vorgesehen ist.
